# EUROPEAN PATENT SPECIFICATION

(11) **EP 1 375 433 B1**
(45) Date of publication and mention of the grant of the patent: **23.05.2007**
(21) Application number: 03425360.9
(22) Date of filing: 10.06.2003
(51) Int. Cl.: C02F 1/48

(54) **Demineralizing device for fluids**
Vorrichtung zur Entmineralisierung einer Flüssigkeit
Dispositif de déminéralisation d'un liquide

(30) Priority: 14.06.2002 IT MI20021323
(43) Date of publication of application: 02.01.2004
(73) Proprietor: Scanditalia AS, 3011 Drammen (NO)
(72) Inventor: Colombotto, Amedeo, 66023 Francavilla al Mare (Chieti) (IT)
(74) Representative: Tansini, Elio Fabrizio

(56) References cited:
- EP-A- 0 338 697
- DE-A- 4 318 429
- FR-A- 2 628 271
- GB-A- 2 335 656
- US-A- 5 113 751
- US-A- 5 738 766

## Description

The present invention relates to a demineralising device for reducing mineral deposits and in particular calcareous deposits, which device can be advantageously employed in water-treating and/or heating installations, or in items such as water heaters, irons and so on.

It is known that during use of normal running water, many problems may arise that are connected with the so-called "calcareous deposits" (which mainly consist of deposits of calcium minerals but may also include precipitated salts of other chemical substances) at different waterworks points.

It is known from DE 4318429 a device for hampering the formation of calcium salts in water tubes, wherein two coils are wound lengthwise on a water pipe: such coils are subject to respective voltage/current differentials which are relatively shifted/displaced over time, so that two variable magnetic fields are generated within the space of the pipe.

It is also known from GB 2335656 a system for promoting flocculation and even solid particles' precipitation, wherein flocculation and precipitation of impurities (from a steady liquid mass or a liquid stream) is achieved by treating the liquid with a flocculation agent, in the form of a metal salt, and applying to the treated liquid a magnetic field with flat wave pulses at a sweep of frequencies so as to accelerate floc formation and precipitation. From a structural standpoint, such a system relies on a solenoid wrapped around a liquid conduit which are run through by time-variable current so as to generate time-varying magnetic fields, and at the same time a flocculation chemical agent is added in the water flowing in the solenoid-enhanced conduit.

US 5738766 shows a de-scaling device for neutralizing and preventing formation of calcium carbonate or other scale in a water conduit includes an electromagnetic coil adjacent the conduit and a power supply for the coil. The power supply generates a complex triangular waveform output signal that varies continuously in frequency and amplitude, and the output is applied across the ends of the coil creating time varying magnetic and electric fields.

Analogously, in FR 2628271 an electromagnetic pulse generator which may be installed on any "wall" set into contact with water-like fluid. In particular, in this prior art reference the description and the claims are specifically related to the implementation of the electronic device which generates and controls the pulses, and show no hint or indication on the possible function of the "inductive/capacitive element" which physically propagates the time-varying magnetic field into the liquid mass.

Finally, it is known from EP 0338697 an inhibition system against rust or scale on liquid-contacting surfaces, wherein an electromagnetic signal at a frequency related to the energy absorption/emission characteristics of the liquid is directed into the liquid via "probes" extending into the fluid itself. This system may be employed in water boilers, hot water tanks and industrial water systems.

Actually, incrustations depositing on the pipe walls and/or in different fittings for water treatment (filters or heating resistances, for example) cause degradation of the installation efficiency even to a very high degree both in terms of fluid motion (as they cause a high and undesirable turbulence) and in terms of energy, because the calcareous deposits, that usually are bad heat conductors, greatly hinder heat transmission from the heating devices to water.

In addition, it is to be pointed out that should calcareous deposits fully obstruct one or more parts of an installation, even very serious damages could occur that may lead to impair safety in use.

Therefore, different systems have been developed for intervening against formation of calcareous deposits or also exclusively for eliminating them from water in order to avoid arising of the above mentioned deposits.

According to a first known art typology, it is possible to intervene on water from a chemical point of view, by introducing appropriate substances thereinto that react with the calcium salts suspended in the water, or that alternatively attack the already solidified calcareous formations.

The known art briefly described above however has some serious limits. In fact, often addition of chemical substances to water alter water drinkableness or in any case involves arising of strong (and often undesirable) modifications to the organoleptic properties of the water itself.

In addition, for carrying out chemical water treatments a non negligible consumption of reacting substances is required that must be obviously restored, which will bring about a rise in costs.

To solve the above drawbacks at least partly, a different typology of water treatment has been adopted in which phenomena more directly linked to physics are exploited.

In accordance with this further known art typology, a more or less modulated high-frequency electromagnetic field is induced in the water to be decalcified, which field acts on the mineral particles suspended in the water counteracting formation of solid calcareous deposits.

Carrying out of this water/electromagnetic field interaction relies on appropriate permanent magnets inserted in the pipelines or on coils wound on the pipelines for water passage that are excited by a high-frequency alternating current. In this way, the electromagnetic field passes through the water stream interacting therewith in the above stated manner.

This known art too, however, has some drawbacks that in this case are represented by a low overall efficiency.

In fact, in these known devices both the magnets and the induction coils are placed on the flow pipes and therefore passage of water through the space region permeated by the magnetic (or electromagnetic) field takes place quickly; consequently, this field has a reduced period of time for acting on the ionic species suspended in the water. Ultimately, this involves a weak decalcifying effect that can be only partly compensated for by a more extended distribution of said coils or magnets (but this is not always possible, for reasons connected with the pipeline course or the requirement of an increase in the electric energy supply).

Under this situation, the technical task underlying the present invention is to provide a demineralising device capable of substantially obviating the above mentioned limits.

Mainly, the present invention aims at providing a demineralising device ensuring high efficiency in the fluid (preferably water) demineralizing treatment, also with reference to important material masses to be treated.

Within the scope of this technical task it is an important aim of the invention to provide a demineralising device capable of treating water in an efficient manner without making use of chemical additives and/or reactants. More generally, it is to be noted that the present invention aims at conceiving a device that neither induces ionic-exchange phenomena in the water to be demineralised, nor induces variations in the acid value (pH) of the water itself.

Still, the present invention aims at providing a device for water demineralisation without intervening on the organoleptic properties of the water itself, so as to ensure water drinkableness and/or maintenance of clearness and the absence of smell or taste.

In addition, the present invention aims at conceiving a demineralising device capable of being advantageously integrated to any level into complex items such as household electrical appliances or the like, and that at all events does not involve substantial modifications to the latter.

Another important aim of the invention is to conceive a device that is of simple accomplishment and can be used with ease in the domestic sector too, so that costs can be advantageous reduced and spreading on the market is increased.

The technical task mentioned and the aims specified are substantially achieved by a demineralising device having the features set out in one or more of the appended claims.

Description of a preferred but non exclusive embodiment of a process for fluid demineralisation preferably put into practice by a demineralising device illustrated in the accompanying drawings is given hereinafter, by way of non-limiting example. In the drawings:
- Fig. 1 is a perspective view of a circuit element operating in accordance with the present invention; and
- Fig. 2 is a diagrammatic view of a demineralising device comprising the circuit element in Fig. 1.

With reference to the drawings, the demineralising device in accordance with the invention is generally identified by reference numeral 1a, while the fundamental circuit element of the device 1a is denoted at 1.

A process for fluid demineralisation substantially comprises a step of arranging a predetermined fluid mass in an operating space, followed by a step of inducing a variable electromagnetic field therein.

This variable electromagnetic field permeates the operating space at least partly and therefore performs its effects on the chemical substances suspended in the fluid (or at least on the chemical substances that are in the above mentioned operating space).

Fluctuations in intensity and direction of the field vectors alter, to a microscopic level, tendency of the calcium salts (and/or other minerals) to aggregate and precipitate; consequently, the same salts being submitted to the interaction of the variable magnetic field, do not succeed in creating compact and hard mineral deposits, but they remain suspended in the fluid in the form of powders with little aggregation (or in any case with poor capacity of binding together to form macroscopic structures) and therefore can be carried along with the fluid.

Advantageously, and in a different manner from the above described known art, in the fluid-arranging step the fluid mass itself is maintained, for a predetermined period of time, under substantially steady conditions within the operating space.

In more detail, during the step of inducing the variable electromagnetic field, the fluid mass keeps localized within the operating space (it may remain substantially immobile in the operating space, for example), or in other words it does not give origin to important flows going out of the operating space.

Should not the fluid to be demineralized be completely immobile within said operating space, it is in any case possible to maximise the residence time of same by suitably exploiting the (natural or forced) convection phenomena so that said fluid circulates in a convenient manner within the space permeated by the variable electromagnetic field

By maintaining these conditions in the fluid mass, the interaction effects between the variable magnetic field and the substances dissolved in the fluid can be utilised for a much longer time than the available time if the fluid were moving (as compared with a fluid running at high speed within a pipeline, for example).

Therefore, the deposit-preventing effect generated by the variable electromagnetic field is efficiently applied for a much longer period of time with a much higher effectiveness.

From a practical point of view the variable electromagnetic-field induction is obtained by supplying an electric user base 2 operatively active on the fluid mass with a basic electric voltage (or current).

Generally, this basic electric current or voltage will be constant (it can be a direct current or an alternating current having the traditional frequency of a domestic power line or mains, for example) and can be not directly used for inducing the variable magnetic field.

A secondary electric voltage or current (that will preferably be variable in time) is overlapped on said basic electric voltage or current, so as to generate a variable magnetic field.

It is to be pointed out that in the electric user base 2 a "constant" (or low-frequency, at the most) current or voltage travels, on which a "variable" voltage or current (having a higher frequency) is overlapped.

Conveniently, to enable the hitherto described process to be put into practice, the secondary electric voltage or current is to be generated: this can be done following technologies of known type.

Accomplishment of the above described process can advantageously rely on a circuit element that, as explained in more detail in the following, is associable with a demineralising device.

This circuit element 1 first of all comprises an input 5a adapted to receive a basic electric current (that may come from an electric energy source such as a mains outlet or an electric accumulator) with which a modulating element 3 is connected in circuit, this element 3 being designed to generate a secondary electric voltage (current); also present is an output 5c that is in turn connected in circuit with the input 5a and at least the modulating element 3.

Overlapping of the variable secondary current on the basic electric current is obtained by an adder element 4 interposed in circuit between the input 5a, output 5c and modulating element 3. In other words, the adder element 4 is connected in circuit at least with the input 5a and the modulating element 3 to cause overlapping of the basic electric current on the secondary electric current.

The output 5c is operatively associable with an electric user base 2 (a coil, a condenser or a resistance that can be passed through by an electric current, for example) that can have the particular function of generating a variable electromagnetic field in a predetermined fluid mass to be demineralised.

In order to maximise flexibility of use said electric user base 2 can also be not specifically constructed for generating the variable magnetic field, but it can also perform other functions: for example, the electric user base 2 may be a heating resistance, as can be found in boilers of ordinary steam irons and electrical water heaters.

Taking into account the small value of the high-frequency current/voltage, also directly connected with output 5c may also be a household appliance (a washing machine or a dishwasher, for example).

Depending on circumstances, the modulating element 3 can be embodied by different electric or electronic devices of known type: it may consist for example of a generator of high-frequency alternating electric current/voltage, or a generator of modulated and/or pulsed current/voltage having a given frequency spectrum.

For more accuracy and quality in operation, the circuit element 1 may comprise a predetermined number of filters interposed in circuit between the input 5a, modulating element 3, adder element 4 and output 5c; these filters can carry out appropriate selections of the frequencies of the electric currents addressed to the electric user base 2 and the power line, in such a manner that the fluctuation frequency of the variable magnetic field can be optimised and admission of high frequency to the power line can be reduced.

In addition, safety elements and/or control elements adapted to detect and/or signal predetermined operating conditions (possible voltage drops, absence of electric load or electric current leaks, for example) can be also present in the circuit element 1. These safety and/or control elements that may generally consist of devices of known type (differential switches, fuses and others) are preferably dedicated to breaking of the basic electric current and/or the secondary electric current under predetermined operating conditions.

Advantageously, due to the structural features herein set out, the circuit element can be integrated into the structure of a complex machinery (a household appliance, an electrical water heater and so on), or can be made and marketed in such a manner that it can be connected with any electrical apparatus.

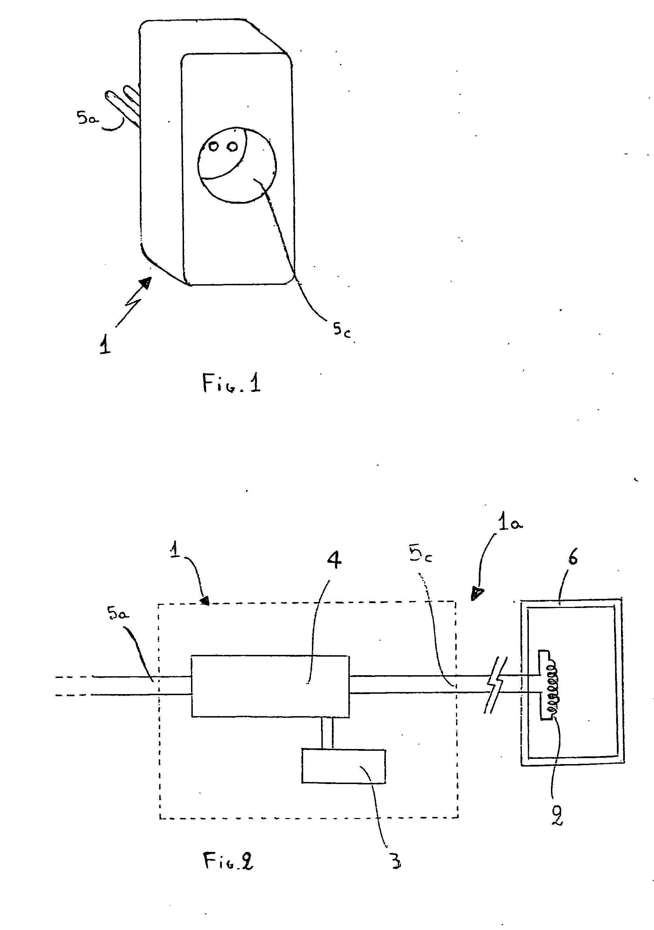

In the last-mentioned case (see Fig. 1) the circuit element 1 is included within a protection shell and above all is characterized in that the input 5a and/or output 5c can be connected with a power line and/or an electrical apparatus, respectively.

If the ordinary domestic power line is concerned (and therefore the circuit element 1 is wished to be associated with any household appliance or an electrical water heater) the input 5a and output 5c will be provided with the appropriate bipolar or three-pole outlets, in compliance with the regulations in force. It is in any case apparent that the present invention can be such accomplished, by adopting the appropriate modifications, that it can be connected with industrial power lines or at all events with power lines with non-standard voltages.

The circuit element 1 is part of a demineralising device 1a that practically is the association of a circuit element 1 with at least one electric user base 2 and a stagnation tank 6 in which the fluid to be demineralised is to be loaded.

In more detail, this demineralising device 1a comprises at least one electric user base 2 (designed to generate a variable electromagnetic field in a predetermined fluid mass to be demineralised) and at least one modulating element 3 (operatively active on the electric user base 2 to induce at least one secondary electric current therein); an adder element 4 is also present which is operatively active between the electric user base 2 and the modulating element 3 to overlap a basic electric current on the secondary current.

The electric user base 2 is a heating element so that the fluid to be demineralised is simultaneously submitted to two effects: heating by Joule effect and inhibition of the processes causing deposit of calcium salts and other minerals.

As already pointed out above, the demineralising device 1a further comprises a stagnation tank 6 internally defining the already mentioned operating space. This operating space is designed to receive a predetermined amount of fluid to be demineralised.

Conveniently, the "complete" demineralising device too (i.e. the device resulting from the combination of the circuit element 1 with the electric user base 2 and the stagnation tank 6) can have (electric or electronic) safety elements and/or control elements performing the same functions as already described above.

If several implements are wished to be connected with the demineralising device, the latter can be advantageously provided with several outputs, so that several electric user bases 2 can be connected.

Conveniently, the "complete" demineralising device too can be provided with outlets from which a suitable high-frequency signal to be applied to a coil for possible winding on the fluid-carrying pipes can be directly drawn.

Any household item that typically can be a household electrical appliance or a fluid heater comprising at least one electric user base 2 (that is adapted to heat a predetermined fluid mass, for example), can comprise at least one demineralising device 1a and/or at least one circuit element 1 (that can be integrated into the item itself, or can be connected therewith if a circuit element as shown in Fig. 1 is wished to be used), that will be operatively interlocked to the electric user base 2 and will obviously be of the above described type.

The invention achieves important advantages.

Much higher levels of efficiency than in the devices of known type can be reached.

In addition, the great construction simplicity enables the demineralising device to be easily integrated into complex machinery such as steam irons, washing machines, boilers and so on; in this way treatment of the fluid can be done within the machinery itself which is advantageous for the overall effectiveness and reliability.

On the other hand, taking into account the manufacturing simplicity of the device of the present invention, the construction costs and/or the costs for integrating it into complex machinery are very reduced while at the same time the machinery value is greatly increased as a result of its capability of preventing calcareous deposits.

Secondly, it is to be pointed out that the present device has been such conceived that no type of chemical substance is required to be introduced into the fluid: in fact, due to the high efficiency in exploiting the effects of the variable magnetic field, no interventions of chemical nature are required on the chemical species dissolved therein (this is particularly appreciated as far as water is concerned).

Furthermore, the circuit element 1 made and marketed in the embodiment shown in Fig. 1 can be easily used as an "adapter" and connected with different household appliances; at the same time it is to be noted that the efficiency of the present device not only has beneficial effects on inhibiting the calcareous deposits, but also hinders proliferation of fungi, mildews and algae. At the same time, it will be recognized that the interaction between the variable electromagnetic field and the chemical species present in the water to be demineralized gives a greater dirt-removing power to possible cleansing substances suspended in the water.

## Claims

1. A demineralizing device comprising:
- a stagnation tank (6) internally defining an operating space designed to receive an amount of fluid to be demineralised;
- an electric user base (2) which is a heating element located inside said stagnation tank (6) and designed to generate a variable electromagnetic field within a fluid mass to be demineralised,
**characterized in that** it further comprises a circuit element (1), said circuit element (1) comprising:
- an input (5a)electrically connectable with a domestic power line and adapted to receive a basic electric current from an electric energy source;
- an output (5c) connected in circuit with the input (5a) and at least with the modulating element (3), said output (5c) being operatively associable with an electric user base (2) designed to generate a variable electromagnetic field within a predetermined fluid mass to be demineralised;
- a modulating element (3) connected in circuit with said input (5a) and designed to generate a secondary electric current; and
- least one adder element (4) connected in circuit with said input (5a) and modulating element (3) to overlap the basic electric current on the secondary electric current.

2. A demineralizing device as claimed in claim 1, **characterized in that** said circuit element further comprises safety elements and/or control elements adapted to detect and/or signal operating conditions, said safety elements and/or control elements being preferably adapted to break the basic electric current/voltage and/or the secondary electric current/voltage.

3. A demineralizing device as claimed in claims 1 or 2, **characterized in that** said modulating element (3) is a generator of high-frequency alternating electric current and/or voltage and/or of modulated current and/or pulsed current and/or voltage having a given frequency spectrum.

4. A demineralizing device as claimed in anyone of the preceding claims, **characterized in that** said circuit element further comprises a predetermined number of filters interposed in circuit between the input (5a), the modulating element (3), the adder element (4) and the output (5c).

## Patentansprüche

1. Vorrichtung zur Entmineralisierung einer Flüssigkeit, umfassend:
- einen Staubehälter (6), der einen Arbeitsraum innerhalb des eigenen Inneren festlegt, der zur Aufnahme einer zu entmineralisierenden Flüssigkeit bestimmt ist;
- einen elektrischen Verbraucher (2), der ein Heizelement ist, das innerhalb des Staubehälters (6) angeordnet und dazu bestimmt ist, ein variables, elektromagnetisches Feld in einer zu entmineralisierenden Flüssigkeitsmasse zu erzeugen,
**dadurch gekennzeichnet, dass** sie überdies ein Schaltungselement (1) umfasst, wobei das Schaltungselement (1) umfasst:
- einen Eingang (5a), der mit Hauselektronetz elektrisch verbindbar ist und einen elektrischen Basisstrom empfängt, der von einer elektrischen Energiequelle stammt;
- einen Ausgang (5c), der schaltungsmäßig mit dem Eingang (5a) und mit mindestens einem Modulatorelement (3) verbunden ist, wobei der Ausgang (5c) mit einem elektrischen Verbraucher (2) wirksam zuordenbar ist, der dazu bestimmt ist, ein variables elektromagnetisches Feld in einer vorgegebenen, zu demineralisierenden Flüssigkeitsmasse zu erzeugen;
- ein Modulatorelement (3), das schaltungsmäßig mit dem Eingang (5a) verbunden und dazu bestimmt ist, einen sekundären elektrischen Strom zu erzeugen; und
- mindestens ein Summierelement (4), das mit dem Eingang (5a) und dem Modulatorelement (3) schaltungsmäßig verbunden ist, um den elektrischen Basisstrom dem sekundären elektrischen Strom zu überlagern.

2. Vorrichtung zur Entmineralisierung einer Flüssigkeit nach Anspruch 1, **dadurch gekennzeichnet, dass** das Schaltungselement überdies Sicherheitselemente und/oder Überwachungselemente umfasst, welche die Betriebsbedingungen erfassen und/oder anzeigen, wobei die Sicherheitselemente und/oder Überwachungselemente bevorzugter Weise fähig sind, den elektrischen Basisstrom/Spannung und/oder den sekundären elektrischen Strom/Spannung unterbrechen.

3. Vorrichtung zur Entmineralisierung einer Flüssigkeit nach Anspruch 1 oder 2, **dadurch gekennzeichnet, dass** das Modulatorelement (3) einen Wechselspannungs- und/oder Wechselstromgenerator hoher Frequenz und/oder Spannung und/oder modulierten Stroms und/oder mit Impulsen ist, die ein vorgegebenes Frequenzspektrum besitzen.

4. Vorrichtung zur Entmineralisierung einer Flüssigkeit nach einem beliebigen der vorstehenden Ansprüche, **dadurch gekennzeichnet, dass** das Schaltungselement überdies eine vorgegebene Anzahl von Filtern umfasst, die schaltungsmäßig zwischen dem Eingang (5a), dem Modulatorelement (3), dem Summierelement (4) und dem Ausgang (5) zwischengeschaltet sind.

## Revendications

1. Dispositif de déminéralisation comprenant:
- un récipient de stagnation (6) définissant à son intérieur un espace de traitement destiné à recevoir une quantité de fluide à déminéraliser;
- un poste d'utilisation électrique (2) qui est un élément chauffant situé à l'intérieur dudit récipient de stagnation (6) et destiné à engendrer un champ électromagnétique variable dans une masse de fluide à déminéraliser,
**caractérisé en ce qu'**il comporte en outre un élément de circuit (1), ledit élément de circuit (1) comprenant:
- une entrée (5a) qui peut être branchée électriquement à un réseau électrique domestique et apte à recevoir un courant électrique de base en provenance d'une source d'énergie électrique;
- une sortie (5c) connectée en circuit à l'entrée (5a) et au moins à un élément de modulation (3), ladite sortie (5c) pouvant être associée pour le fonctionnement à un poste d'utilisation électrique (2) destiné à engendrer un champ électromagnétique variable dans une masse de fluide prédéterminée à déminéraliser;
- un élément de modulation (3) connecté en circuit à ladite entrée (5a) et destiné à engendrer un courant électrique secondaire; et
- au moins un élément additionneur (4) connecté en circuit à ladite entrée (5a) et audit élément de modulation (3) pour combiner le courant électrique de base avec le courant électrique secondaire.

2. Dispositif de déminéralisation selon la revendication 1, **caractérisé en ce que** ledit élément de circuit comporte en outre des éléments de sécurité et/ou des éléments de contrôle aptes è détecter et/ou signaler les conditions de fonctionnement, lesdits éléments de sécurité et/ou éléments de contrôle étant de préférence aptes à interrompre le courant/la tension électrique de base et/ou le courant/la tension électrique secondaire.

3. Dispositif de déminéralisation selon les revendications 1 ou 2, **caractérisé en ce que** ledit élément de modulation (3) est un générateur de tension et/ou de courant électrique alternatif radiofréquence et/ou de tension et/ou de courant modulé et/ou à impulsions ayant un spectre de fréquences donné.

4. Dispositif de déminéralisation selon l'une quelconque des revendications précédentes, **caractérisé en ce que** ledit élément de circuit comporte en outre un nombre prédéterminé de filtres interposés en circuit entre l'entrée (5a), l'élément de modulation (3), l'élément additionneur (4) et la sortie (5c).
